**Europäisches Patentamt**

**European Patent Office**

**Office européen des brevets**

(19)

(11) **EP 1 465 408 A2**

## EUROPEAN PATENT APPLICATION

(12)

(43) Date of publication:
06.10.2004 Bulletin 2004/41

(51) Int Cl.7: **H04N 1/60**

(21) Application number: **03022939.7**

(22) Date of filing: **09.10.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **03.04.2003 US 406995**

(71) Applicant: **Hewlett-Packard Development Company, L.P.**
**Houston, TX 77070 (US)**

(72) Inventors:
• **Zeng, Huanzhao**
**Vancouver WA 98683 (US)**

• **Lammens, Johan**
**08193 Sant Cugat Barcelona (ES)**
• **Nielsen, Mary**
**Eagle ID 83616 (US)**
• **Jodra, Rodolfo**
**Boise ID 83713 (US)**

(74) Representative: **Schoppe, Fritz, Dipl.-Ing.**
**Schoppe, Zimmermann, Stöckeler & Zinkler**
**Patentanwälte**
**Postfach 246**
**82043 Pullach bei München (DE)**

(54) **Black channel preservation system and method**

(57)    A method and apparatus is used for preserving a black channel when a reference color space without a black channel is used to convert between a source black channel color space and a destination black channel color space (504). In one embodiment, the preservation and conversion system receives an image represented in a black channel color space and converts it to a reference color space, correlates at least one channel from the reference color space with a black output level that identifies a look-up table (LUT) for color values and a weight for interpolating the color values in the LUT for a destination device (510), interpolates between color values in at least two LUTs using the weight (514), and converts the image in the reference color space to the destination the black channel color space using the black output level and interpolated color values in the LUT (520).

FIG. 2

EP 1 465 408 A2

## Description

## BACKGROUND OF THE INVENTION

The present invention relates to color conversion and color printing. Color content design, generation, and print have changed dramatically over the past several years. Designers using digital cameras, computers, and other graphic design equipment are able to create content digitally and then forward to printers for printing and distribution. The designers generally proof the content on a display device and assume that the colors and images can be accurately matched on the destination device used by the commercial printer to output the content.

For a variety of reasons, however, matching colors and images is actually a complex and difficult process. Commercial printers process and print a customer's print job from files they neither created nor proofed for final printing. Quite often, the customer proofs the print job in a color space unfamiliar to the commercial printer or different than the color space used for printing. Because the customer is not familiar with the commercial printer's equipment, these files are generated without a color profile specific to the color characteristics of the target device used to ultimately print the final color image. If the job is large, these problems are multiplied as the same content may end up being printed on different destination devices. In this latter situation, color matching may require the same content to be uniquely modified to accommodate the different color profiles of each printer.

Color management workflow manages the color information contained in the files as they change format and color space representation during this process. An open color management system in the color management workflow converts images into a reference color space representation for portability and then into the color space adjusted for the particular target printer device. For example, an image rendered in a CMYK (cyan, magenta, yellow, and black) color space is converted to a generic or reference color space in the open color management system before being targeted to a specific destination device. The open color management system promoted by the ICC (International Color Consortium) represents color data in a Profile Connection Space (PCS) reference space that includes both the CIEXYZ and CIELAB formats.

Unfortunately, the K-Channel, also called the black channel, cannot be recovered when conventional methods are used to convert from CMYK to the PCS reference color space. Both the CIELAB color space and the CIEXYZ PCS color space represent color information related to visual perception without the black channel information. Despite this shortcoming, files still must be converted from the PCS color space back to the CMYK space before they are sent to be printed or output on the destination device. Current attempts to convert from the PCS color space back to a CMYK color space representation often fall short due to the problems related to the black channel. For example, printing or publishing digital images without proper amounts of the black channel may not achieve desired color appearance. One conventional approach creates a closed-loop system that maintains the K-channel only when the source and destination devices are known in advance. However, if multiple unknown source and destination devices are going to be used, the closed-loop systems could not be used to effectively preserve the K-channel.

Another approach uses an open-loop system that performs both gamut mapping and color transformations in real time within the color management. This approach called "Smart Linking" may preserve the black channel but takes an extraordinary amount of time as a device link between the source device and destination device is created. Further, smart linking is also not advantageous as it does not allow for user adjustments to be made to the gamut mapping between different source and destination devices.

Accordingly, high quality digital publishing remains difficult as conventional color management workflow does not preserve the K-channel and effectively address these and other related problems.

## SUMMARY OF THE INVENTION

One aspect of the invention features preserving a black channel when a reference color space without a black channel is used to convert between a source black channel color space and a destination black channel color space. The preservation an conversion includes converting an image in a source black channel color space into a reference color space, correlating at least one channel from the reference color space with a black output level that identifies a look-up table (LUT) for color values and a weight for interpolating the color values in the LUT for a destination device, interpolating between color values in at least two LUTs using the weight and converting the image in the reference color space to the destination the black channel color space using the black output level and interpolated color values in the LUT.

Another aspect of the invention describes a method and system of creating conversion information to preserve a black channel when a reference color space without a black channel is used to convert between a source black channel color space and destination black channel color space. Creating conversion information includes measuring the reference color space against a set of color patches generated from a destination device, creating a set of LUTs for colors in the destination black channel color space that match one or more rendering intents for color printing by the destination device, associating each black output value (K) with at least one of the LUTs for colors in the destination black channel color space and providing a weighting factor for each black output value for interpolating between entries in the LUTs of the destination black channel color space.

The details of one or more embodiments of the invention are set forth in the accompanying drawings and the description below. Other features and advantages of the invention will become apparent from the description, the drawings, and the claims.

**BRIEF DESCRIPTION OF THE DRAWINGS**

FIG. 1 is a block diagram depicting a color management system used to convert between color spaces and designed in accordance with one implementation of the present invention;

FIG. 2 provides an overall flowchart diagram of the workflow associated with converting between black channel color spaces (e.g., CMYK) in accordance with one implementation of the present invention;

FIG. 3 is a flowchart diagram of the operations for generating a composite table included in the private BtoKn tag in accordance with one implementation of the present invention;

FIG. 4 provides tables and linearization curves used in accordance with one implementation of the present invention;

FIG. 5 is a flow chart diagram of the operations used to convert between two different black channel color spaces in accordance with one implementation of the present invention; and

|FIG. 6 is a block diagram of a system used in one implementation for performing an apparatus or method of the present invention.

**DETAILED DESCRIPTION**

Aspects of the present invention are advantageous in at least one or more of the following ways. A black channel is preserved when converting from a black channel color space to a reference color space and then back to the black channel color space. Implementations of the invention work in popular black channel color spaces including device CMYK color space and standard CMYK color spaces, such as Specifications Web Offset Publications (SWOP) CMYK, and reference color spaces like CIELAB and CIEXYZ. The black channel is not preserved independently but in consideration of the CMY colors to be rendered by the destination device. More accurate color reproduction is possible as the black channel value influences the CMY colors output by the destination device and vice-versa. This is useful when implementing or performing colorimetric and perceptual intents or mapping as described and established by the International Color Consortium (ICC).

Implementations of the present invention are also advantageous as they support open-loop systems while preserving the black channel and are not limited to closed-loop workflow processing. Open-loop systems define the source and destination devices separately for color processing purposes. The open-loop system has more flexibility for color calibration and transformations. Conversely, closed-loop systems may be less complex but link the source and destination devices and profiles together during color processing and therefore are less flexible.

Implementations of the present invention can be used to convert from a black channel color space (i. e., CYMK - cyan, yellow, magenta, black) to a reference color space (i.e., CIELAB, CIEXYZ, RGB) in the open-loop system yet while preserving the black channel of the source image. Moreover, the conversions can be made using the present invention without necessarily knowing the color reproduction characteristics or profiles of both the source and destination devices. Accordingly, a color management method (CMM) does not rely on a closed-loop look up table (LUT) to convert directly between the source and destination devices. Instead, implementations of the present invention store an additional private tag (e.g., BtoKn) in the profile for each destination device with information for preserving a black channel as well as converting from a reference color space to a black channel color space in real-time. This also occurs more quickly as the gamut mapping is essentially done in advance during profile creation rather than in addition to real-time color transformation.

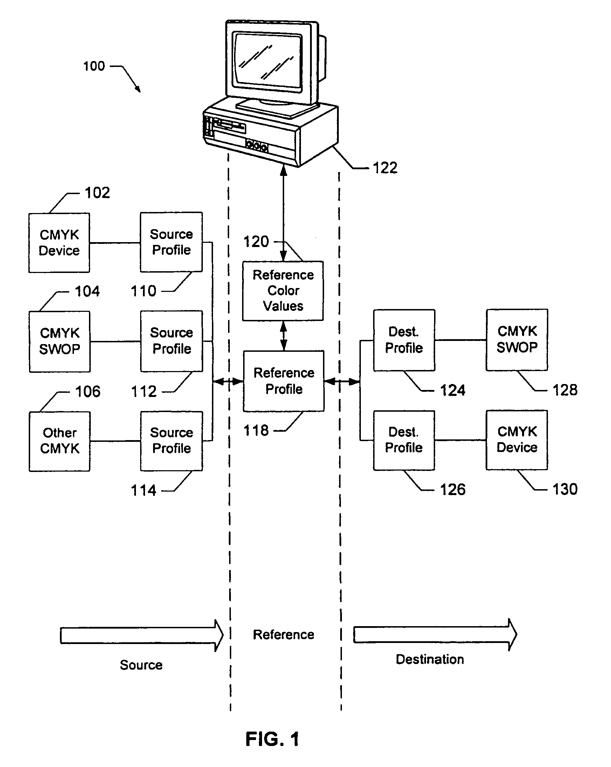

FIG. 1 is a block diagram depicting a color management system used to convert between color spaces and designed in accordance with one implementation of the present invention. Color management system 100 produces images in a black channel color space using a CMYK device 102, a SWOP CMYK device 104, other CMYK device 106, and corresponding source profile 110, source profile 112, and source profile 114 to describe the respective color characteristics of these devices.

Colors represented in a source device color space and its corresponding profile is converted into color values 120 represented in a reference color space according to a reference profile 118. For example, reference color values 120 can be represented using CIELAB, CIEXYZ, or other reference color spaces. CIELAB, CIEXYZ are reference color spaces used in open-loop systems as an intermediary color representation that facilitates color conversion between many different source and destination devices. This open-loop system also has the benefit of requiring fewer profiles for color space conversion as the reference color space maps between many different color spaces. In addition to these benefits, images rendered in the reference format can also be previewed on a terminal device 122 designed to operate in the reference color space (i.e., CIELAB, or CIEXYZ).

Difficulties arise when converting from reference color values 120 to destination color values compatible with destination devices in black channel color spaces (e.g. CMYK SWOP device 128 and CMYK device 130). To overcome these difficulties, implementations of the present invention include an additional private tag "BToKn" in the destination profiles that preserves black values while using the reference color space information. Private tag BToKn is created in advance by measuring output from the various destination devices and storing the resulting measurements and information in respective BToKn tags in corresponding destination profile 124 and destination profile 126 for each respective destination device 128 and 130. Measurements can be made using a variety of instruments including a colorimeter, spectrophotometer, and densitometer. Details on the creation and use of the BToKn tag is described in further detail later herein.

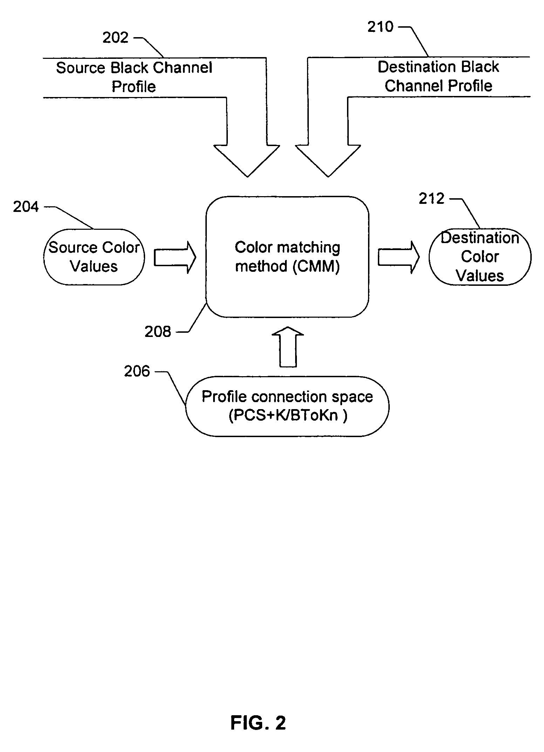

FIG. 2 provides an overall flowchart diagram of the workflow associated with converting between black channel color spaces in accordance with one implementation of the present invention. Initially, an image is provided with source color values represented in a black channel color space like CMYK (204). A source black channel color space profile (202) includes look-up tables (LUT) and other color characteristics associated with the source device producing the image. In one implementation, a color matching method (CMM) (208) performs the color transformations from source color values (204) into reference color values compatible with the profile connection space (PCS) standards (206) established by the International Color Consortium (ICC). Color values represented in the reference color spaces like CIELAB or CIEXYZ can be readily converted to work with many other devices. To obtain the black channel color space representation (e.g., CMYK), CMM (208) processes destination black channel color space profile (210) in accordance with implementations of the present invention using the BToKn tag and produces an image back in the black channel color space with the black channel restored back in the image.

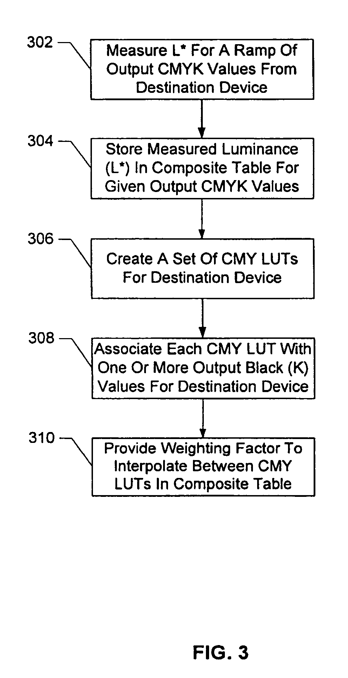

FIG. 3 is a flowchart diagram of the operations for generating a composite table included in the private BToKn tag in accordance with one implementation of the present invention. Each destination device has a destination profile modified in accordance with implementations of the present invention to include this composite table along with other necessary information used in the BToKn tag. In one implementation of the present invention, the composite table facilitates preserving black channel information when converting between two black channel color spaces. For example, the composite table includes source black (K) and other information to convert from an ICC compatible color space like CIELAB or CIEXYZ to a black channel color space of CMYK for a destination device.

Preparing the composite table for the CIELAB color space involves recording the L* (luminance) values produced when ramps of black, cyan, magenta, and yellow are printed by the destination device being analyzed (302). $L^*$ is measured for different combinations of CYMK printed by the destination device. The composite table is created in advance during product development and then bundled in the BToKn tag along with drivers and other color space information upon manufacturing.

For example, each black value is represented as a percentage from 0% to 100%, from 0 to 255 in an 8-bit representation or 0 to 65535 in a 16-bit representation. Each black value is associated with a corresponding luminance value and stored in the composite table (304). To save space and look-up time, each measured black output value is also associated with an index to a 3-D LUT and a weight for using the 3-D LUT.

Additionally, each printer includes in the BToKn tag a number of color LUTs for various combinations of CMY colors (306). Different CMY color LUT combinations may capture different characteristics of the color output device. Each CMY color combinations LUT is further associated with one or more of the black output values as previously described (308). The black output values associated with different CMY color combinations in advance ensures the black channel is preserved when converting between two black channel color spaces.

To improve the color reproduction, the composite table also includes a weighting factor for interpolating between two black values and corresponding LUT information found in the BToKn tag (310). The weighting factor can vary depending on inherent output or destination device characteristics as well as the particular rendering intent selected for mapping between the color spaces. For example, when using an ICC definition during profile creation, the intents or mappings that may affect the final colors produced by the color output of the destination device include: perceptual, saturation, and colorimetric (relative and absolute).

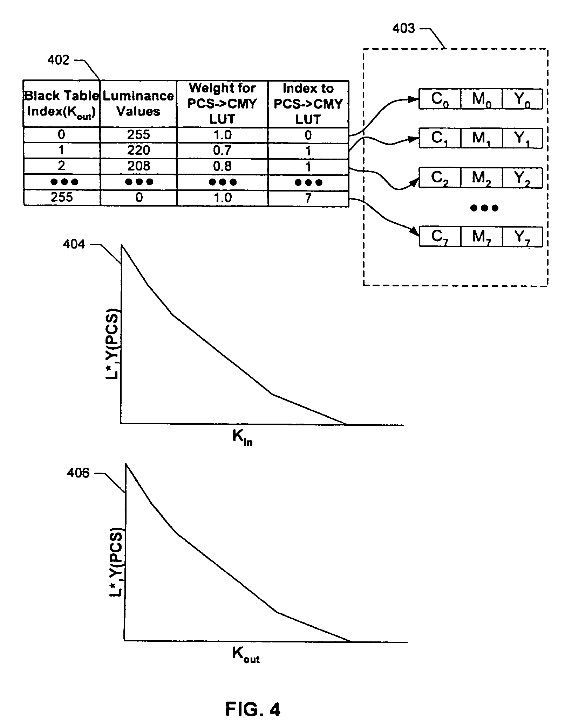

FIG. 4 provides a composite table 402, CMY LUTs 403, an L-$K_{in}$ linearization curve 404, and an L-$K_{out}$ linearization curve 406 used in conjunction with composite table 402 and in accordance with one implementation of the present invention. In this example, composite table 402 includes a black table index Kout, a set of luminance values, a set of PCS-CMY LUT weighting values, and a set of PCS-CMY LUT indexes. The black table index ($K_{out}$) in this example includes a range of black values from 0 to 255 in 8-bit representation. Each black table index value is associated with a different luminance value depending on the particular destination device. In one implementation, the black table index (Kout) output values are printed by a printer, measured, and compared to determine the closest luminance value in the range from 0 to 255 as partially illustrated in composite table 402.

L-Kout linearization curve 406 represents this graphically showing a non-linear relationship between a destination device black output values (Kout) and corresponding luminance $L^*$ in the CIELAB color space (or Y in CIE XYZ color space).

L-Kin linearization curve 404 is used for the conversion from a black channel color space to the reference color space. Typically, a CMM uses the AToBi tag in the source profile to create a black (K) linearization LUT graphically represented by L-Kin linearization curve 404. The L-Kin linearization curve 404 facilitates converting the black channel from the source device to corresponding luminance values used thereafter in the reference color space. The black channel information is preserved, in part, by measuring the relationship between a given luminance and the black (K) output value in advance for a given destination device. A CMYK conversion in accordance with the present invention merges the two linearization curves creating a LUT for converting from the source K to the destination K and preserving the black channel. In an alternate implementation, L-Kin linearization curve 404 can be combined with L-Kout linearization curve 406 to create a 1-D table that converts directly between Kin and Kout thus reducing storage access time and improving performance when converting between the two channels.

Different CMY combinations are also created in advance and associated with different black (K) output values from the destination device. This couples certain CMY color combinations with different black (K) output values produced by the particular destination output device. CMY LUTs 403 in FIG. 4 depicts this relationship between the CMY LUTs for a particular destination device and the LUT index in composite table 402.

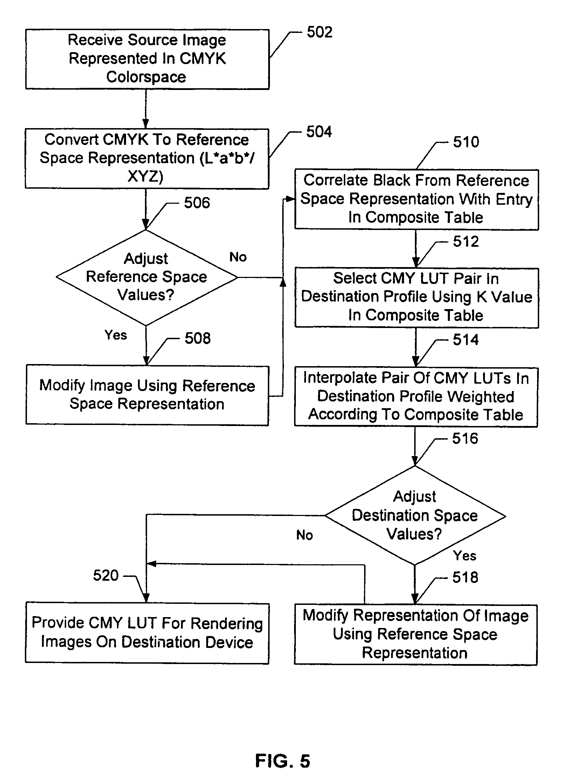

FIG. 5 is a flow chart diagram of the operations used to convert between two different black color spaces in accordance with one implementation of the present invention. Initially, a source image is received represented in a black channel color space (502). Alternatively, other implementations of the present invention could use other black channel color spaces other than CMYK.

The image is then converted from the black channel color space to the reference space representation (504). In one implementation, the AtoBi tag of the source profile facilitates converting from the source K value to a luminance value. Converting to the destination K from luminance is obtained from the composite table using the BtoKn tag. As previously mentioned, a single conversion from the source K ($K_{in}$) to a destination K ($K_{out}$) using a one-dimensional table for the conversion is generally more efficient and may improve performance. Assuming a CMYK colorspace is being used, the image is then converted completely from the CMYK representation to a CIELAB representation or other reference color space representation (504). Later, the black channel can be recovered in accordance with the present invention using the composite table or the 1-D table mapping $K_{in}$ and $K_{out}$.

If desired, a user controlling or editing the image in a CIELAB color space can edit the image in the PCS reference color space (506). For example, a user may decide to enhance certain aspects of the image represented in the CIELAB color space and the destination color space and accommodate for differences in the gamut between the two color spaces (508).

Alternatively, the image can be targeted for a destination device by locating the black index entry in the composite table (510). The black index entry in the composite table in the reference space is used to select a particular CMY LUT pair in the destination profile by way of the corresponding black (K) channel value (512). In one implementation, a black (K) channel value in the composite table corresponding to an nth entry in the CMY LUT implies that both the $n^{th}$ and $(n-1)^{th}$ entries should be used for subsequent interpolation processing. Alternatively, implementations could be designed to select instead the $n^{th}$ and $(n+1)^{th}$ entries from the CMY LUTs in the destination device profile or any other pair of CMY LUTs as designated. Referring to CMY LUTs 403 in FIG. 4 for example, a black table index of "2" may correspond to a luminance value of "208" and the "1" CMY LUT from the destination device profile. Accordingly, one implementation would interpolate between the "1" CMY LUT and the "0" CMY LUT as stored in the BToKn tag associated with the destination device profile.

Interpolating between the selected CMY LUTs from the destination profile is weighted to further improve the accuracy of the color conversion into the black channel color space (514). The weights are determined experimentally in advance for different destination devices and stored in the composite table for rapid access and use. In one implementation, a weight entry in the composite table of W=0.7 is applied to the $n^{th}$ CMY LUT color values and the complimentary weight of 0.3 (i.e., 1-W) is applied respectively to the $(n-1)^{th}$ corresponding CMY LUT color values. One example formula for interpolating entries from the CMY LUT in the destination profile is as follows:

$$CMY_{Final} ?[W? (CMY)_n]? [(1? W)(CMY)_{n?1}]$$

CMY Interpolation Formula

Where:

$CMY_{Final}$ is the final CMY values to be combined with the selected black (K) value;
$[W ?(CMY)_n]$ is the weighted contribution of CMY values from the $n^{th}$ CMY LUT in the destination device profile;
$[(1 ? W)(CMY)_{n?1}]$ is the weighted contribution of CMY values from the $(n-1)^{th}$ CMY LUT in the destination device profile;

Once the CMY values are interpolated, the selected black channel value and final CMY values are used to render the image back in the black channel color space (516). A user may adjust the CMYK image using curve shaping, black point adjustments, and other methods for modifying the CMYK image (518) or may proceed to output the color image on the destination CMYK device without further changes (520). In many cases, the CMYK device is a high-speed and high-precision color printer. Alternate implementations of the present invention could also be adapted for use in lower-speed, lower-precision, and lower-cost color printers and still provide improved color conversions between two black channel color spaces as previously described.

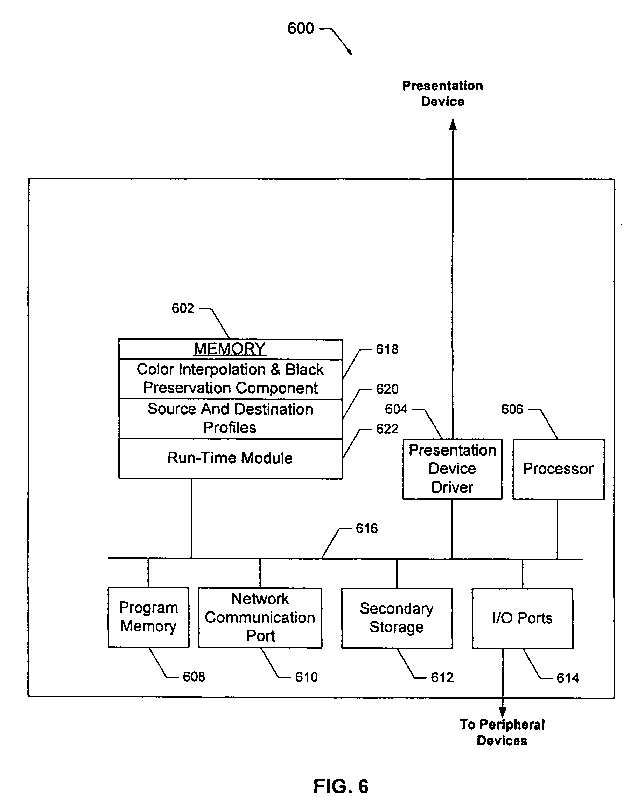

FIG. 6 is a block diagram of a system 600 used in one implementation for performing apparatus or method of the present invention. System 600 includes a memory 602 to hold executing programs (typically random access memory (RAM) or writable read-only memory (ROM) such as a flash ROM), a presentation device driver 604 capable of interfacing and driving a display or output device, a program memory 608 for holding drivers or other frequently used programs, a network communication port 610 for data communication, a secondary storage 612 with secondary storage controller, and input/output I/O) ports 614 also with I/O controller operatively coupled together over a bus 616. The system 600 can be preprogrammed, in ROM, for example, using field-programmable gate array (FPGA) technology or it can be programmed (and reprogrammed) by loading a program from another source (for example, from a floppy disk, a CD-ROM, or another computer). Also, system 600 can be implemented using customized application specific integrated circuits (ASICs).

In one implementation, memory 602 includes color interpolation and black preservation component 618, source and destination profiles 620, and a run-time module 622 that manages the resources used on system 600 by implementations of the present invention. The profiles 620 can also be stored in other storage devices, such as hard drive. As previously described, color interpolation and black preservation component 618 uses a source profile and a destination profile to convert between different black channels and preserve the black channel in accordance with the present invention. Black preservation component 618 uses the AtoBn tag from the source profile to convert colors from the source black channel color space to a reference color space. AtoBn tag is also used to include information describing the black or the luminance channel from the source device or printer. Black preservation component 618 then takes the BtoKn tag from the destination profile to reverse the process for the destination device or printer converting the reference color plus the additional black or luminance channel to the destination black channel color space (i.e., CMYK). In one implementation, the BToKn Tag includes the composite table and a set of CMY LUTs for the particular destination device. Consistent with the AtoBn tag and other tags in the PCS profile, the "n" in the BToKn refers to different rendering intents or mapping methods to be performed and includes: perceptual, saturation, and colorimetric (relative and absolute).

While examples and implementations have been described, they should not serve to limit any aspect of the present invention. Accordingly, implementations of the invention can be implemented in digital electronic circuitry, or in computer hardware, firmware, software, or in combinations of them. Apparatus of the invention can be implemented in a computer program product tangibly embodied in a machine-readable storage device for execution by a programmable processor; and method steps of the invention can be performed by a programmable processor executing a program of instructions to perform functions of the invention by operating on input data and generating output. The invention can be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language. Suitable processors include, by way of example, both general and special purpose microprocessors. Generally, a processor will receive instructions and data from a read-only memory and/or a random access memory. Generally, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by, or incorporated in, ASICs.

Further, while specific embodiments have been described herein for purposes of illustration, various modifications may be made without departing from the spirit and scope of the invention. Accordingly, the invention is not limited to the above-described implementations, but instead is defined by the appended claims in light of their full scope of equivalents.

## Claims

1.  A method of preserving a black channel when a reference color space without a black channel is used to convert between a source black channel color space and a destination black channel color space, comprising:

    converting an image in a source black channel color space into a reference color space (504); correlating at least one channel from the reference color space with a black output level that identifies a look-up table (LUT) for color values and a weight for interpolating the color values in the LUT for a destination device (510); interpolating between color values in at least two LUTs using the weight (514); and converting the image in the reference color space to the destination the black channel color space using the black output level and interpolated color values in the LUT (520).

2. The method of claim 1 wherein the at least one channel from the reference color space corresponds to a luminance value from a CIELAB color space.

3. The method of claim 4 wherein the luminance value from the reference color space is measured for the destination device by printing a ramp of black output values.

4. The method of claim 3 wherein the luminance values are entered into a composite table with corresponding output black values.

5. The method of claim 4 wherein the composite table further includes an index identifying one or more LUTs for color values created for the destination device and corresponding weights for each of the one or more LUTs for color values (402, 403).

6. A method of creating conversion information to preserve a black channel when a reference color space without a black channel is used to convert between a source black channel color space and destination black channel color space, comprising:

   measuring the reference color space against a set of color patches generated from a destination device (302);
   creating a set of LUTs for colors in the destination black channel color space that match one or more rendering intents for color printing by the destination device (306);
   associating each black output value (K) with at least one of the LUTs for colors in the destination black channel color space(308); and
   providing a weighting factor for each black output value for interpolating between entries in the LUTs of the destination black channel color space (310).

7. The method of claim 6 further comprising,
   storing in a data storage area at least one channel from the reference color space, a luminance level of each black channel output value (K), an index identifying the LUT used for the colors in the destination black channel color space, and a weighting factor used to interpolate between entries in the LUTs of the destination black channel color space.

8. The method of claim 7 wherein the data storage area is selected from a set of data storage areas including: a table, an object class, a relational database, and an object-oriented database.

9. The method of claim 7 wherein the data storage area is included in a BToKn tag configured for the destination device and compatible with an International Color Consortium (ICC) color management workflow.

10. An apparatus for preserving a black channel when a reference color space without a black channel is used to convert between a source black channel color space and a destination black channel color space, comprising:

   means for converting an image in a source black channel color space into a reference color space (618, 620);
   means for correlating at least one channel from the reference color space with a black output level that identifies a look-up table (LUT) for color values and a weight for interpolating the color values in the LUT for a destination device (618, 620);
   means for interpolating between color values in at least two LUTs using the weight (618, 620); and
   means for converting the image in the reference color space to the destination the black channel color space using the black output level and interpolated color values in the LUT (618, 620).

100

122

102
CMYK
Device

Source
Profile

110

104
CMYK
SWOP

Source
Profile

112

106
Other
CMYK

Source
Profile

114

120

Reference
Color
Values

118

Reference
Profile

Dest.
Profile

124

CMYK
SWOP

128

Dest.
Profile

126

CMYK
Device

130

Source

Reference

Destination

**FIG. 1**

202 —

Source Black Channel
Profile

210 —

Destination Black
Channel Profile

204 —

Source Color
Values

Color matching
method (CMM)

212 —

Destination
Color
Values

208 —

206 —

Profile connection space
(PCS+K/BToKn )

**FIG. 2**

302 — Measure L* For A Ramp Of Output CMYK Values From Destination Device

304 — Store Measured Luminance (L*) In Composite Table For Given Output CMYK Values

306 — Create A Set Of CMY LUTs For Destination Device

308 — Associate Each CMY LUT With One Or More Output Black (K) Values For Destination Device

310 — Provide Weighting Factor To Interpolate Between CMY LUTs In Composite Table

**FIG. 3**

403

402

| Black Table Index($K_{out}$) | Luminance Values | Weight for PCS->CMY LUT | Index to PCS->CMY LUT |
|---|---|---|---|
| 0 | 255 | 1.0 | 0 |
| 1 | 220 | 0.7 | 1 |
| 2 | 208 | 0.8 | 1 |
| ••• | ••• | ••• | ••• |
| 255 | 0 | 1.0 | 7 |

$C_0$ | $M_0$ | $Y_0$

$C_1$ | $M_1$ | $Y_1$

$C_2$ | $M_2$ | $Y_2$

•••

$C_7$ | $M_7$ | $Y_7$

404

$L^*, Y(PCS)$

$K_{In}$

406

$L^*, Y(PCS)$

$K_{out}$

FIG. 4

Receive Source Image
Represented In CMYK
Colorspace ⌐ 502

↓

Convert CMYK To Reference
Space Representation (L*a*b*/
XYZ) ⌐ 504

↓

Adjust
Reference Space
Values? ⌐ 506

No →

Correlate Black From Reference
Space Representation With Entry
In Composite Table ⌐ 510

↓ ⌐ 512

Select CMY LUT Pair In
Destination Profile Using K Value
In Composite Table

↓ ⌐ 514

Interpolate Pair Of CMY LUTs In
Destination Profile Weighted
According To Composite Table

↓ ⌐ 516

Yes

Modify Image Using Reference
Space Representation ⌐ 508

Adjust
Destination Space
Values?

No ←

Yes

⌐ 518

Modify Representation Of Image
Using Reference Space
Representation

520 ⌐

Provide CMY LUT For Rendering
Images On Destination Device

**FIG. 5**

600

Presentation
Device

602

MEMORY

Color Interpolation & Black
Preservation Component — 618

Source And Destination
Profiles — 620

Run-Time Module — 622

604 — Presentation
Device
Driver

606 — Processor

616

Program
Memory

Network
Communication
Port

Secondary
Storage

I/O Ports

608

610

612

614

To Peripheral
Devices

**FIG. 6**